# EUROPÄISCHE PATENTSCHRIFT

(11) **EP 0 981 773 B1**
(45) Veröffentlichungstag und Bekanntmachung des Hinweises auf die Patenterteilung: **18.06.2003**
(21) Anmeldenummer: 98929206.5
(22) Anmeldetag: 08.04.1998
(51) Int. Cl.: G02B 6/38

(54) **SCHIRMEINRICHTUNG FÜR EINE LICHTWELLENLEITER-STECKERANORDNUNG**
PROTECTIVE DEVICE FOR A POWER OUTLET FOR OPTICAL FIBRE
DISPOSITIF DE PROTECTION D'UN SYSTEME DE PRISE DE COURANT POUR FIBRES OPTIQUES

(30) Priorität: 15.05.1997 DE 19720445
(43) Veröffentlichungstag der Anmeldung: 01.03.2000
(73) Patentinhaber: SIEMENS AKTIENGESELLSCHAFT, 80333 München (DE)
(72) Erfinder: MAIR, Eduard, D-81477 München (DE); SEDLMEIER, Peter, D-81669 München (DE)
(86) Internationale Anmeldenummer: DE9800994
(87) Internationale Veröffentlichungsnummer: WO98052080

(56) Entgegenhaltungen:
- EP-A- 0 267 074
- EP-A- 0 580 289
- WO-A-94/12900
- PATENT ABSTRACTS OF JAPAN vol. 008, no. 031 (P-253), 9. Februar 1984 & JP 58 186709 A (FURUKAWA DENKI KOGYO KK), 31. Oktober 1983

## Beschreibung

Die Erfindung bezieht sich auf eine Schirmeinrichtung bestehend aus einem Baugruppenträger und einer Steckeranordnung zum steckbaren Anschließen zumindest eines Lichtwellenleiters an einen Baugruppenträger, wobei die Steckeranordnung ein buchsenartiges metallisches Führungsteil für einen Steckverbinder des Lichtwellenleiters aufweist, wobei das Führungsteil in einen Durchbruch einer Rückwandleiterplatte des Baugruppenträgers hineinragt wobei die Rückwandleiterplatte mit einer zumindest partiell freileigenden geerdeten Schirmlage versehen ist und wobei das Führungsteil mit einem Schirmkörper verbunden ist, der eine Kontaktöffnung aufweist, an der er umlaufend mit einem Außenmantel des Führungsteils kontaktiert ist und wobei der Schirmkörper mit einem geerdeten Schirmteil kontaktierbar ist.

Eine derartige Einrichtung ist z.B. durch die EP 0267 074 A bekannt geworden, bei der die Enden zweier zu verbindender Lichtwellenleiter mit komplementären Steckerteilen gekoppelt sind, die unmittelbar ineinander steckbar sind. Eines der beiden Steckerteile weist eine metallische Hülse auf, über die ein buchsenartiges Metallstück gezogen ist. Dieses ist über eine Spiraldruckfeder mit einem geerdeten Schirmblech des Steckerteils verbunden. Das Metallstück ragt teilweise in eine Durchführungsöffnung einer Leiterplatte hinein, die eine geerdete Schirmlage aufeist.Zwischen dem Metallstück und der Schirmlage bleibt ein ungeschirmter Ringspalt.

Ferner ist durch die WO 94/12900 eine Steckeranordnung bekannt geworden, bei der an die Innenseite einer Rückwandleiterplatte eines Baugruppenträgers ein Gehäuse angesetzt ist, in dem metallische Führungshülsen aufgenommen sind, die durch einen Durchbruch der Rückwandleiterplatte hindurchragen. Auf die Führungshülsen ist ein Steckverbinder eines von außen ankommenden Lichtwellenleiters aufsteckbar. Der Steckverbinder weist eine metallische Überwurfmutter auf, die mit der Führungshülse verschraubbar ist. Die Rückwandleiterplatte weist auf ihrer Außenseite eine Schirmlage auf, auf die ein Metallkörper aufgesetzt ist, in den eine metallische Schirmhülse eingeschraubt ist. Die Überwurfmutter und die Schirmhülse sind bis über den Stecker hinaus verlängert.

In diesem Bereich weist die Schirmhülse freigeschnittene Federzungen auf, die an einem glattflächigen Kontaktabschnitt der Überwurfmutter anliegen. Der Durchmesser des Durchbruchs ist so groß, daß die Führungshülse bzw. der Steckverbinder die Rückwandleiterplatte seitlich nicht berühren, um ein Verspannen der Steckverbinderanordnung zu vermeiden. Durch die kaminartige Schirmeinrichtung wird der Durchbruch elektromagnetisch verschlossen und hinreichend geschirmt.

Ferner ist durch das Patent Abstarct zur JP 58186709 A eine eine Steckverbinderanordnung für Lichtwellenleiter bekannt geworden, bei der ein Photodetektor an einem flanschartigen Buchsenteil befestigt ist, in das ein Gegenstecker eingesteckt werden kann und das an einem Metallgehäuse befestigt ist. Ein Durchbruch in der Gehäusewand ist mit Ausnahme eines engen Fensters für den Lichtdurchtritt mit einem Schirmblech verschlassen, das zwischen dem Buchsenteil und der Gehäusewand eingeklemmt ist.

Der Erfindung liegt die Aufgabe zugrunde, den Fertigungs- und Montageaufwand für die Schirmeinrichtung zu verringern und die Schirmwirkung zu verbessern. Diese Aufgabe wird durch die Erfindung gemäß Anspruch 1 gelöst.

Die Führungshülse kann so lang sein, daß sie nicht nur in den Durchbruch hineinragt, sondern durch diesen hindurchragt. Der Schirmkörper überbrückt den Abstand zwischen der Führungshülse und der Schirmlage auf kurzem Wege. Er kontaktiert die Schirmlage und die Führungshülse unmittelbar, so daß Zwischenkontakte entfallen. Der Schirmkörper kann einfach und kostengünstig ausgebildet werden und hat einen geringen Raumbedarf, der eine einfache Montage ermöglicht. Die Steckverbindung ist im Vergleich zu einer Anordnung mit einer einschraubbaren Schirmhülse erheblich leichter zugänglich, so daß der Abstand zwischen benachbarten Steckverbindern verringert werden kann. Der Ringspalt zwischen der Führungshülse und der Schirmlage wird hochfrequenzdicht verschossen.

Durch die seitliche Nachgiebigkeit der Kontaktöffnung gegenüber der Führungshülse wird vermieden, daß auf diese seitliche Kräfte ausgeübt werden, die die z.B. geschlitzte Führungshülse verbiegen und die optische Verbindungsqualität beeinträchtigen.

Der Durchbruch kann z.B. als mit der Schirmlage verbundene durchplattierte Bohrung ausgebildet sein, der hülsenförmige Schirmkörper kann z.B. aus gut leitfähigem elastomerem Kunststoff bestehen und eine innere umlaufende Rippe aufweisen. Der Schirmkörper wird in die Bohrung eingesetzt und kontaktiert die Führungshülse mit der nachgiebigen Rippe. Die seitliche Nachgiebigkeit des Schirmkörpers ergibt ferner eine zuverlässige Kontaktierung entlang dem Umfang der Schirmhülse.

Das Schirmblech kann in einfacher Weise aus einem Kontaktblech, z.B. aus Messing, Bronze, Neusilber oder Chrom-Nickel-Stahl gestanzt werden. Die Führungshülse kann entlang ihrem Umfang in der Längsrichtung weisende scharfkantige Rippen z.B. in Form einer Rändelung aufweisen, die sich in die glatt kreisrunde Kontaktöffnung eindrücken. Dies ergibt eine Vielzahl von sicheren Kontaktstellen, die die Restspalte elektromagnetisch verschließen. Das Schirmblech kann so dünn gehalten werden, daß es den Einbau anderer Bauteile nicht behindert.

Vorteilhafte Weiterbildungen der Erfindung sind in den Unteransprüchen gekennzeichnet:

Die Kontaktzungen nach Anspruch 2 werden beim Durchstecken der Führungshülse aus der Materialebene schräg ausgelenkt und schmiegen sich unter federnder Spannung an den z.B. zylindrischen Außenmantel der Führungshülse an. Dies ergibt eine sichere Kontaktierung bei großer seitlicher Nachgiebigkeit, die einen entsprechenden Toleranzausgleich zwischen dem Schirmblech und der Führungshülse ermöglicht.

Durch die Weiterbildung nach Anspruch 4 ist es möglich, mehrere Führungshülsen mit einem einzigen Schirmblech zu kontaktieren.

Durch die Weiterbildungen nach Anspruch 5 wird das Schirmblech in einfacher Weise mit der Schirmlage kontaktiert. Ein besonderer Vorteil besteht darin, daß das Schirmblech bereits am Gehäuse vormontiert geliefert werden kann, so daß jeglicher Mehraufwand bei der Montage des Baugruppenträgers entfällt.

Durch die Weiterbildung nach Anspruch 6 wird das Schirmblech am Gehäuse zentriert. Die Zentrieröffnungen können so gehalten werden, daß sich das Schirmblech an diesen verklemmt und dadurch bis zur Endmontage sicher gehalten wird.

Im folgenden wird die Erfindung anhand eines in der Zeichnung dargestellten Ausführungsbeispieles näher erläutert.
- Figur 1: zeigt perspektivisch einen Ausschnitt aus einem Baugruppenträger mit einem Steckverbinder für einen Lichtwellenleiter,
- Figur 2: Teile des Baugruppenträgers nach Figur 1 unmittelbar vor dem Zusammenbau,
- Figur 3: die Teile nach Figur 2 in einer anderen perspektivischen Ansicht nach dem Zusammenbau.

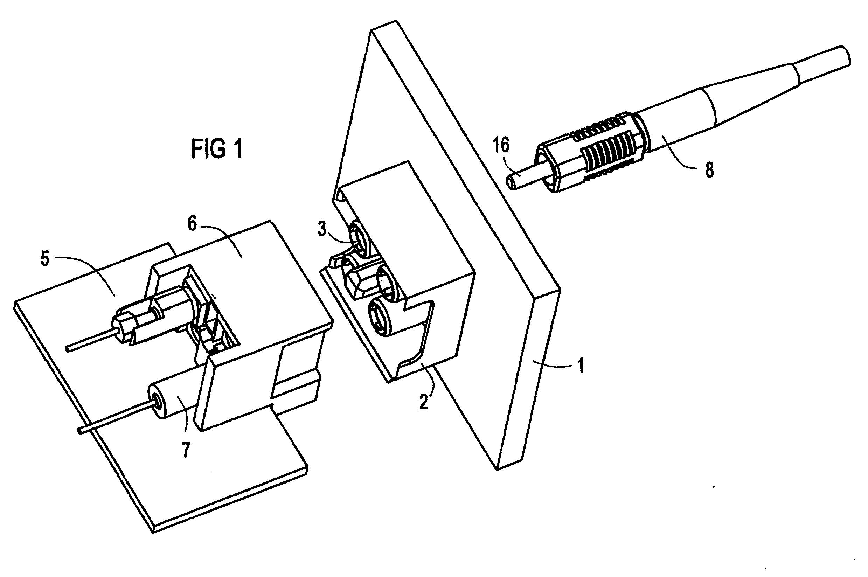

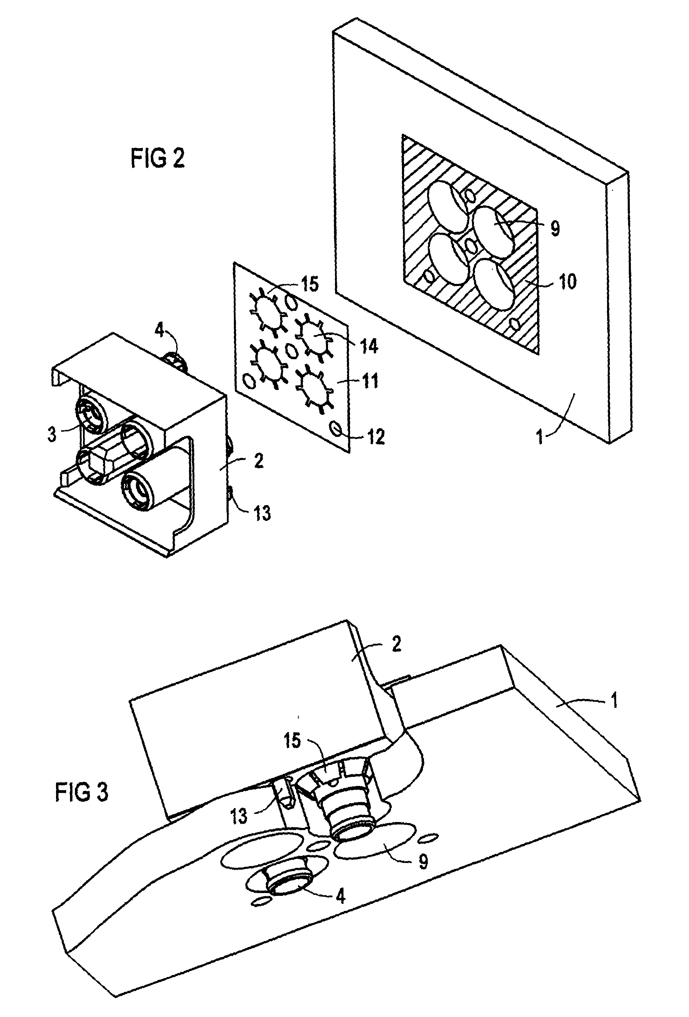

Nach Figur 1 weist ein nicht näher dargestellter Baugruppenträger für einschiebbare Baugruppen eine ausschnittsweise dargestellte Rückwandleiterplatte 1 auf, auf deren Baugruppenseite ein Gehäuse 2 befestigt ist, das mit Aufnahmen 3 für Führungshülsen 4 (Figur 2) versehen ist. Eine ausschnittsweise dargestellte einschiebbare Baugruppe 5 weist einen Kanteneckverbinder 6 mit an Lichtwellenleiter angeschlossenen Stiftsteckern 7 auf, die mit hier nicht sichtbaren Steckstiften in die Führungsbuchsen 4 des Gehäuses 2 einsteckbar sind. Auf der dem Gehäuse 2 gegenüberliegenden Seite der Rückwandleiterplatte 1 sind Steckverbinder 8 für Lichtwellenleiter mit ihren Steckstiften 16 einzeln in die Führungsbuchsen 4 einsteckbar.

Nach den Figuren 2 und 3 ist die Rückwandleiterplatte 1 mit zylindrischen Durchbrüchen 9 versehen, in die die Führungsbuchsen 4 nach dem Zusammenbau mit Spiel hineinragen. Auf der Seite des Gehäuses 2 ist die Rückwandleiterplatte 1 mit einer Schirmlage 10 versehen, die zumindest im Bereich des Gehäuses 2 freigelegt ist. Ein als Schirmblech 11 ausgebildeter Schirmkörper ist zwischen dem Gehäuse 2 und der Schirmlage 10 angeordnet und im zusammengebauten Zustand kontaktgebend eingeklemmt. Es weist Zentrieröffnungen 12 auf, mit denen es auf entsprechend angeordneten Zentrierzapfen 13 des Gehäuses 2 fixiert ist.

Das Schirmblech 11 ist ferner mit Kontaktöffnungen 14 versehen, in die sternförmig angeordnete radial verlaufende schmale Schlitze eingelassen sind, zwischen denen Kontaktzungen 15 ausgebildet sind, deren freie Enden nach innen weisen. Die lichte Weite zwischen den Kontaktzungen 15 ist enger als der Außendurchmesser der Führungshülsen 4 im Bereich des Schirmbleches 11.

Beim Zusammenfügen der Teile treten die Führungshülsen 4 durch die Kontaktöffnungen 14 des Schirmbleches 11 hindurch, wobei die Kontaktzungen 15 in den Durchbruch hinein ausgelenkt werden und sich unter Federspannung an den Außenmantel der Führungshülsen 4 anlegen. Die federnde Nachgiebigkeit der Kontaktzungen 15 ermöglicht den Ausgleich von Lageabweichungen zwischen dem Schirmblech 11 und den Führungshülsen 4 und ergeben außerdem eine Vielzahl von sicheren Kontakten zwischen dem Schirmblech 11 und den Führungshülsen 4.

## Patentansprüche

1. Schirmeinrichtung bestehend aus einem Baugruppenträger und einer Steckeranordnung zum steckbaren Anschließen zumindest eines Lichtwellenleiters an diesen Baugruppenträger,
wobei die Steckeranordnung ein buchsenartiges metallisches Führungsteil für einen Steckverbinder (8) des Lichtwellenleiters aufweist,
wobei das Führungsteil in einen Durchbruch (9) einer Rückwandleiterplatte (1) des Baugruppenträgers hineinragt, wobei die Rückwandleiterplatte (1) mit einer zumindest partiell freileigenden geerdeten Schirmlage (10) versehen ist und wobei das Führungsteil mit einem Schirmkörper verbunden ist, der eine Kontaktöffnung (14) aufweist, an der er umlaufend mit einem Außenmantel des Führungsteils kontaktiert ist und wobei der Schirmkörper mit einem geerdeten Schirmteil kontaktierbar ist,
**dadurch gekennzeichnet,**
**dass** die Schirmlage der Rückwandverdrahtung als Schirmteil dient,
**daß** der Schirmkörper als dünnes Schirmblech (11) ausgebildet ist, das einen Zwischenraum zwischen dem metallischen Führungsteil und der Schirmlage überdeckt und das zwischen einem Gehäuse (2) der Steckeranordung und der Schirmlage einklemmbar und mit dieser flächig kontaktierbar ist und
**daß** das Schirmblech (11) zumindest im Bereich der Kontaktöffnung (14) mit auslenkbaren Kontaktzungen versehen ist.

2. Schirmeinrichtung nach Anspruch 1,
**dadurch gekennzeichnet,**
**daß** das Schirmblech (11) von der Kontaktöffnung (14) sternförmig nach außen verlaufende Schlitze aufweist, zwischen denen die aus der Ebene des Schirmbleches (11) auslenkbaren Kontaktzungen (15) gebildet sind, deren nach innen weisende freie Enden die Kontaktöffnung (14) bilden.

3. Schirmeinrichtung nach Anspruch 1 oder 2,
**dadurch gekennzeichnet,**
**dass** das Führungsteil als Führungshülse (4) ausgebildet ist, in deren Bohrung von beiden Enden her Steckstifte von Steckverbindern einsteckbar sind und
**dass** die Führungshülse (4) in einer Aufnahme (3) des Gehäuses (2) gehalten ist.

4. Schirmeinrichtung nach Anspruch 1, 2 oder 3,
**dadurch gekennzeichnet,**
**daß** das Schirmblech (11) mit mehreren Kontaktöffnungen (14) für mehrere einander benachbarte Führungshülsen (4) versehen ist.

5. Schirmeinrichtung nach einem der Ansprüche 1 bis 4,
**dadurch gekennzeichnet,**
**daß** das Gehäuse(2) an der Rückwandleiterplatte (1) befestigbar ist und
**daß** die Schirmlage (10) auf der dem Gehäuse zugewandten Seite der Rückwandleiterplatte (1 angeordnet ist

6. Schirmeinrichtung nach einem der vorhegehenden Ansprüche,
**dadurch gekennzeichnet,**
**daß** das folienartige Schirmblech (11) mit Zentrieröffnungen (12) für hindurchragende Zentrierzapfen (13) des Gehäuses (2) versehen ist.

## Claims

1. Shielding device consisting of a mounting rack and a plug arrangement for the plug connection of at least one optical fibre to this mounting rack, the plug arrangement having a socket-like metal guide part for a plug connector (8) of the optical fibre, the guide part projecting into an aperture (9) of a backplane circuit board (1) of the mounting rack, the backplane circuit board (1) being provided with an at least partially exposed earthed shielding layer (10), and the guide part being connected to a shielding member which has a contact opening (14), at which it makes contact all the way around with an external circumferential surface of the guide part, and it being possible to bring the shielding member into contact with an earthed shielding part, **characterized in that** the shielding layer of the backplane wiring serves as a shielding part, **in that** the shielding member is designed as a thin shielding plate (11) which covers an interspace between the metallic guide part and the shielding layer and which can be clamped between a housing (2) of the plug arrangement and the shielding layer and can be brought into flat contact with the latter, and **in that** the shielding plate (11), at least in the region of the contact opening (14), is provided with deflectable contact tongues.

2. Shielding device according to Claim 1, **characterized in that** the shielding plate (11) has slots which run outwards in the shape of a star from the contact opening (14) and between which the contact tongues (15) are formed, which tongues can be deflected out of the plane of the shielding plate (11) and the inwardly facing free ends of which form the contact opening (14).

3. Shielding device according to Claim 1 or 2, **characterized in that** the guide part is designed as a guide sleeve (4), into both ends of the bore in which plug pins of plug connectors can be plugged, and **in that** the guide sleeve (4) is held in a receptacle (3) of the housing (2).

4. Shielding device according to Claim 1, 2 or 3, **characterized in that** the shielding plate (11) is provided with a plurality of contact openings (14) for a plurality of adjacent guide sleeves (4).

5. Shielding device according to one of Claims 1 to 4, **characterized in that** a housing (2) can be attached to the backplane circuit board (1), and **in that** the shielding layer (10) is arranged on that side of the backplane circuit board (1) which faces towards the housing.

6. Shielding device according to one of the preceding claims, **characterized in that** the foil-like shielding plate (11) is provided with centring openings (12) for centring projections (13) on the housing (2) to project through.

## Revendications

1. Dispositif de blindage composé d'un châssis support de modules et d'un dispositif de connecteurs enfichables destiné au raccordement par enfichage d'au moins un guide d'ondes optiques sur ce châssis support de modules,
le dispositif de connecteurs comportant une pièce métallique de guidage à forme de douille pour un connecteur enfichable (8) du guide d'ondes optiques,
la pièce de guidage dépassant dans un alésage (9) d'une carte à circuits imprimés de panneau arrière (1) du châssis support de modules, la carte à circuits imprimés de panneau arrière (1) étant munie d'une couche de blindage (10) connectée à la masse, qui est au moins partiellement découverte et la pièce de guidage étant reliée à un corps de blindage, qui a une ouverture de contact (14) le long de laquelle il établit un contact sur le pourtour d'une enveloppe extérieure de la pièce de guidage et le cours de blindage pouvant être mis en contact avec une pièce de blindage mise à la masse,
**caractérisé par le fait**
**que** la couche de blindage du câblage de panneau arrière sert de pièce de blindage,
**que** le corps de blindage est conçu sous la forme d'une tôle mince (11), qui recouvre un espace intermédiaire entre la pièce mécanique de guidage et la couche de blindage, qui peut être coincée entre un boîtier (2) du dispositif de connecteurs et la couche de blindage et qui peut établir un contact à grande surface avec cette dernière et
**que** la tôle de blindage (11) comporte, au moins dans la zone de l'ouverture de contact (14), des languettes de contacts qui peuvent dévier de leur position.

2. Dispositif de blindage selon la revendication 1
**caractérisé par le fait**
**que** la tôle de blindage (11) comporte des fentes se développant en étoile vers l'extérieur à partir de l'ouverture de contact (14), entre lesquelles se forment des languettes de contact (15), qui peuvent dévier du plan de la tôle de blindage (11) et dont les extrémités libres tournées vers l'intérieur forment l'ouverture de contact (14).

3. Dispositif de blindage selon la revendication 1 ou 2
**caractérisé par le fait**
**que** la pièce de guidage est conçue sous la forme d'un manchon de guidage (4), dans l'alésage duquel des ergots enfichables de fiches à ergots peuvent être enfichés des deux côtés et
**que** le manchon de guidage (4) est retenu dans une prise (3) du boîtier (2).

4. Dispositif de blindage selon la revendication 1, 2 ou 3
**caractérisé par le fait**
**que** la tôle de blindage (11) est équipée de plusieurs ouvertures de contact (14) pour plusieurs manchons de guidage (4) voisins les uns des autres.

5. Dispositif de blindage selon l'une des revendications 1 à 4
**caractérisé par le fait**
**que** le boîtier (2) peut être fixé sur la carte à circuits imprimés de panneau arrière (1) et
**que** la couche de blindage (10) est disposée sur la face de la carte à circuits imprimés de panneau arrière (1) qui est tournée vers le boîtier.

6. Dispositif de blindage selon l'une des revendications précédentes
**caractérisé par le fait**
**que** la tôle de blindage à forme de film (11) est équipée d'ouvertures de centrage (12) dans lesquelles dépassent des pivots de centrage (13) du boîtier (2).
